# EUROPEAN PATENT APPLICATION

(11) **EP 1 267 263 A2**
(43) Date of publication of application: **18.12.2002**
(21) Application number: 02076952.7
(22) Date of filing: 13.05.2002
(51) Int. Cl.: G06F 9/46

(54) **Hot migration through incremental roll-over using migration plug-ins for conversion during upgrade**

(30) Priority: 11.06.2001 EP 01202218
(71) Applicant: Océ-Technologies B.V., 5914 CC Venlo (NL)
(72) Inventor: Jans, Jozef T. J. M., 5993 GD Maasbree (NL); de Groot, Richard M., 5915 BA Venlo (NL)
(74) Representative: Van de Sande, J.H.A.W.

(57) **Abstract**

A hot migration operation is executed from a first version of a service (511) using a first data model (N), to a second version of the service (512) using a second data model (N+1) that is modified with respect to said first data model. A service comprises a client application (502), a data manager (501) and a data repository (503). The migrate operation is effected on a server facility (SA, SB) that accommodates multiple processes to be running in parallel. The second version client applications (506), a second version data manager (508) operating according to the said second data model, a second version data repository (507) arranged according to the said second data model and cooperating with the second version data manager are installed. The first and the second version data managers are provided each with a migration plug-in (505, 509).

The method uses an incremental roll-over process, wherein in successive steps data is converted from said first version data repository to said second version data repository by means of the migration plug-in until all data will have been converted, after which any old version gets removable.

## Description

### Background of the invention

The invention relates to method as recited in the preamble of Claim 1. Furthermore the invention relates to a system being arranged for implementing such a method and a computer program implenting such a method on a carrier such as a storage medium or electrical signal. In the context of the present invention, a service can represent either of a computer program, a data base system, an operating system, an e-service, or a mixture or combination of these. Furthermore, each of these is being taken in an appropriate scope wherein it would be operative in the ambit of the hardware and software as hereinafter described by way of preferred embodiments. The context of the present invention is such where the use of the application on the one hand, and the maintaining of the application on the other, will generally be separated in time and/or in space, and/or where it would be difficult to schedule a general downtime interval for the complete system that would be sufficiently long to effect the overall migration. The problems associated therewith will generally, but not exclusively, arise when the number of users is large and/or their geographical distribution is wide.

Now, the invention will hereinafter be disclosed with reference to particular embodiments. In principle however, the invention may be used on a wide scale. In general, during migration the user functionality of the application will change, which change will be evident to a user. A particularly advantageous embodiment of the invention can be realised through the use of object-oriented programming. Now, the appearance to a user of such migration has in the prior art been such, that either the application would be rendered inoperable for some time, or even worse, that an actually running client session would become invalidated. To the user in question, such would appear as a malfunction of the application itself or even of some underlying technology. The present inventors have recognised that in many circumstances such inoperability would be considered unacceptable.

### Summary of the invention

Now, the present inventors have recognised that the advantages of an incremental procedure may be able to "hide" as it were, the upgrading or migrating from user entities that are so to say "running behind" in the migrating with respect to others that "have advanced already", and vice versa, hiding that the migration is still incomplete from user entities that have advanced already, with respect to other such entities that are still running behind. In consequence, amongst other things, it is an object of the present invention to keep the entries that have been converted separate from those that haven't and yet to execute the migrating in a "rolling-over" manner. The application-related data repository will remain available throughout, in particular, even during a plurality of successive sessions.

Now therefore, according to one of its aspects the invention is characterized according to the characterizing part of Claim 1.

The invention also relates to a system being arranged for implementing a method as claimed in Claim 1. Further advantageous aspects of the invention are recited in dependent Claims.

### Brief description of the drawings

These and further aspects and advantages of the invention will be discussed more in detail hereinafter with reference to the disclosure of preferred embodiments, and in particular with reference to the appended Figures that show:
Figure 1, two data versions in a first field of use;
Figure 2, two data versions in a second field of use;
Figure 3, the setup in a third field of use;
Figure 4, a hardware embodiment for practicing the invention;
Figure 5, the design concept of the present invention;
Figure 6, as a first UML diagram, a Class diagram;
Figure 7, an initial Version collaboration;
Figures 8a, 8b, collaboration during subsequent migration;
Figure 9, a final Version N+1 collaboration;
Figure 10, an applicable flow chart for use with a load balancing pool; and
Figure 11, an applicable flow chart for use with a single server.

### Applicable fields of use

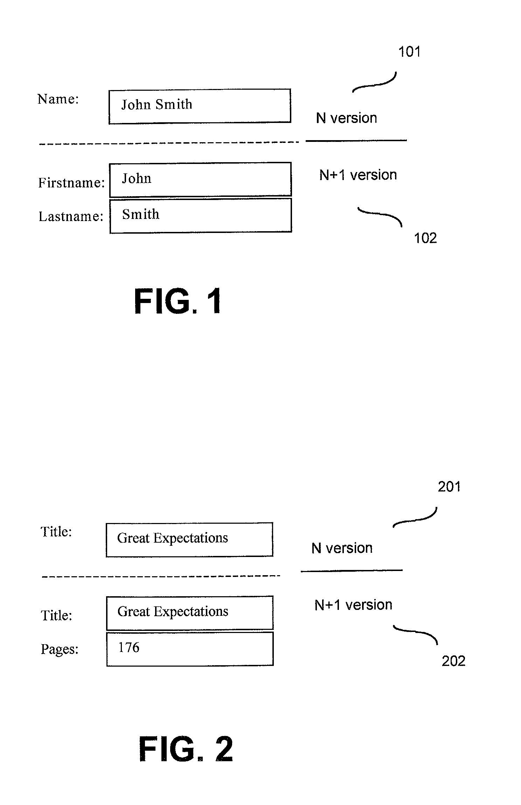

Figure 1 illustrates two versions of a service in a first field of use, in this embodiment for accessing customer-related data in an online retail shop. In the old version (top), a customer's name has been available as a single attribute. In the new version (bottom), the customer's first and second names will be available separately. When no downtime is necessary for effecting the migration, the shop can remain online even in the interval during which the new version will be introduced.

Figure 2 illustrates two versions in a second field of use, in this embodiment a library. The old library application (top) has not maintained information concerning the size of the various books. In the new version (bottom), each book title has a number-of-pages attribute. Through using the present invention's teachings, the library application can remain online during the migration that introduces the attribute extension.

Likewise, an Enterprise Resource Planning system can combine various ones of its respective databases into a single one while remaining online, so that the actual production will not be interrupted or misguided. Likewise, conversion to a new monetary currency (such as the conversion to EUROs as per January 1, 2002), whilst using the present invention would not need synchronization among the various client banks. In fact, various ones thereof may keep using the old currency in their operations even when other banks will have switched over to the new currency already. Likewise, an insurance company may offer a certain insurance policy to a particular customer, whilst in the meantime migrating to a new version of the insurance program in question. Nevertheless, the application will still accept the old data, as they will be entered by a user person. Obviously, this kind of migrating would represent an improved service level.

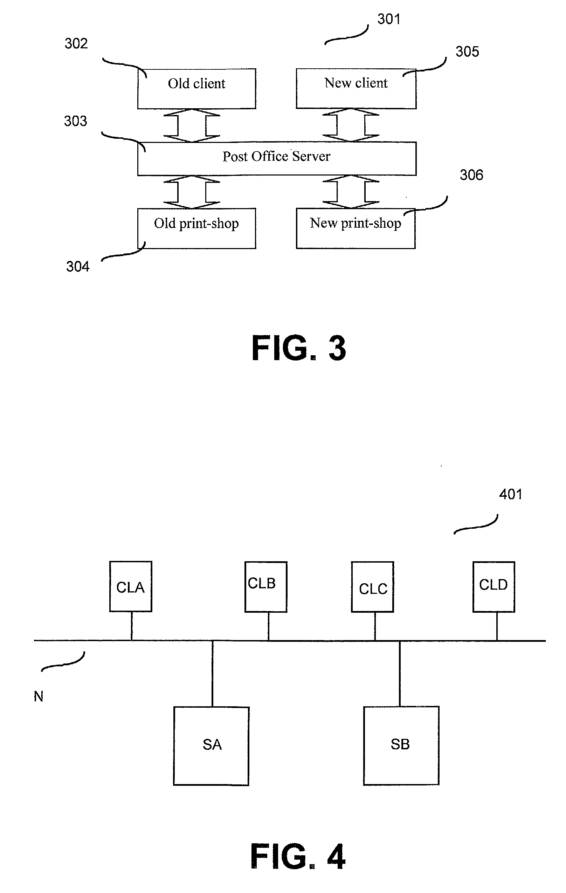

Figure 3 illustrates a setup in a third field of use, to wit, the printing of documents via the Internet. As an example such a print service system 301 comprises an old application , for submitting printjobs 302, a Post Office Server 303 for receiving the print jobs and forwarding these to the old Print Shop 304. The old print service system will accept only a single document for each printing order. On the other hand, a new print service system that includes application 305 and Print Shop 306 will accept multiple documents for a single print order. Now, simultaneous upgrading of all those entities that may be located at various remote locations would in general not be feasible. However, the introduction of the present inventive concept does away with the above requirement for synchronization among the various entities. Old clients as well as old print shops will proceed to use the old paradigm until they will effectively change over to the new service , while new and upgraded applications like item 24 will be able to use the new feature immediately, even while still communicating with stations that have not yet migrated.

In all of the above, the invention may be effected in a distributed environment, most of the time a distributed environment based on one or more platforms will be used.

### Detailed description of preferred embodiments

Figure 4 illustrates a hardware embodiment for practicing the invention. As shown, clients CLA, CLB, CLC, CLD are by way of network N, that may be a LAN, Internet, or other interconnection scheme, interfaced to servers SA, SB. The clients will emanate user requests to the servers that may constitute a load balancing pool through implementing balancing concepts that are known in the applicable art. If applicable, the servers may in fact constitute a single server multiprocessing unit.

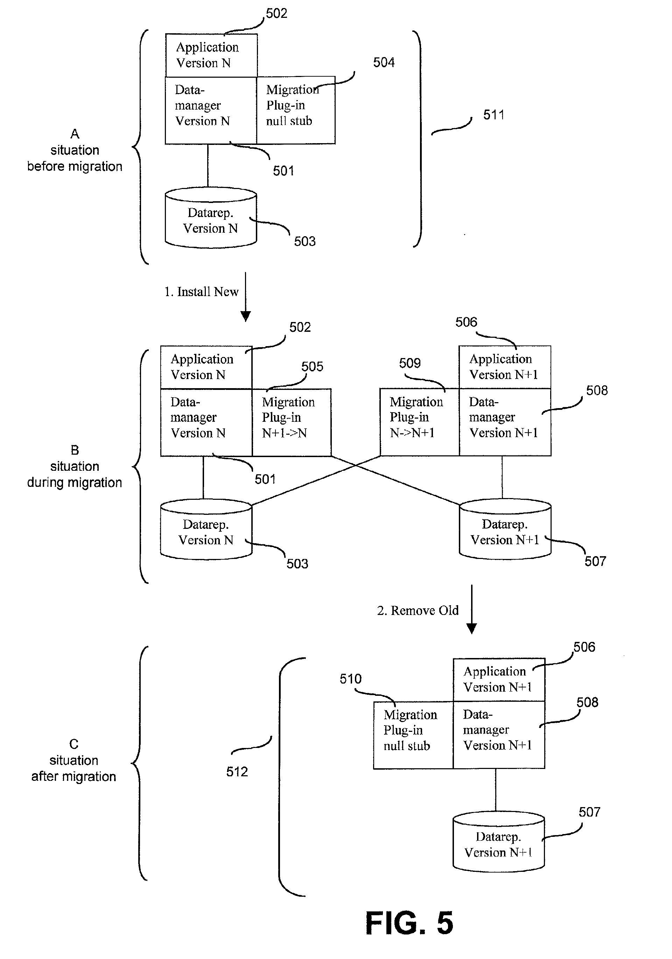

Figure 5 illustrates the concept of the present invention. The figure shows in three subfigures A, B and C respectively the starting situation, the situation during migration and the resulting situation. Same items in any of the parts A, B and C are indicated by the same reference numbers. The top sub-figure A illustrates the initial situation, wherein version N of the application is operative and the application runs normally. Using the data manager (501) of the applicable version N, the applications of the latter (502) will access the data repository (503) of the associated version. As an illustration of the broad deployment of the invention, the notions of application, data manager and data repository are mapped on corresponding notions for some exemplary fields of application. In this respect the term e-service has to be understood as a service made available via a public accessible network, like e.g. internet, and offering a service like: selling books, consultation of data like a phone book, translation services, printing services etc. Fields of application where the method according to the invention can be advantageously applied may be inter alia: operating systems (1), wordprocessing (2), databases (3) and e-services (4). In respective cases, the client application is a file system browser (1), a wordprocessing application (2), a database application (3) and a web site of a service provider (4). The respective data managers are in such case respectively a file system (1), a specific command set like 'load', 'save', 'format' etc (2), a database engine (3), and a program to convert user entered data towards a particular data model (4), where the data repositories are respectively a disk (1), a file system (2), once more a file system (3) and an enterprise resource planning system supporting the particular data model (4). In all cases the data manager (501) will manage the accessing by the application (502) of the data repository (503). The migration plug-in Null stub (504) effects no processing functionality, apart from the necessary interfacing to the data manager. Although represented as a single entity, the application (502) may in fact be running on multiple processes in parallel or even on multiple processors located at a single location or at a plurality of remote locations. The same may apply to the various applications in parts B and C of this Figure. Further, it is noted that an application user that accesses the service via the client application may be a human user or a program (e.g. an agent).

Part B of Figure 5 illustrates the situation during the migration from version N to version N+1. On the one hand, such migration may be effected incrementally in response to user actions. In contradistinction, another drive mechanism would be a complete migration in one step as invoked by the overall system. The latter would be effected by first retrieving all data, and storing those data in the new repository. Now, the left and right halves of part B of Figure 5 are respectively accessible to an application that is relatively "running behind" and still uses version N of the client application (502), and to another application user that is relatively "advanced", and already is using version N+1 of the client application (506). In addition, the data repository has already been made available both in version N+1 (507) and is also still maintained in version N (503). This may mean that part of the data repository is available in the new version, whilst part of it is still available in the old version, the two versions combined being able to in combination accommodate the total data. The converting of the data from the data repository or parts thereof is generally effected as a background process that is invisible to the users. For accessing the data repository or part thereof in the same version as the application, the latter would of course need no conversion between the data manager and the associated data repository, as indicated in the Figure by a straight connecting line. In this case, i.e. situation B, the migration plug-in null stub (504) has been replaced by a migration plug-in N+1>N (505) at left. A counterpart situation to the one discussed here above would prevail at the right hand side of the Figure, where both the application Version N+1 (506) is accessible to a user, and furthermore a data repository or part (507) associated with the N+1st version is operative. This situation will require a data manager version N+1 (508), and a migration plug-in N>N+1 (509) as have been illustrated.
The bottom part C of Figure 5 illustrates the situation where all of the users and all of the data repositories will have been converted to version N+1. When no "old version" data repository part need any longer be accessed by the newer version user, the migration plug-in will be replaced again by migration plug-in null stub (510). In the above, the users will generally experience either no downtime at all, or only during such brief instants necessary for the installing and uninstalling of the migration plug-ins (505, 509). It is remarked that it is possible to start a further upgrade to a version N+2 even before a migration to Version N+1 will be completed, such embodiment requiring a plug-in that iterates over multiple migration plug-ins for the various versions in Fig. 5, part B, which can be implemented according to the composite design pattern known from "Design Patterns: Elements of reusable object oriented software", Erich Gamma et al. ISBN 0-201-63361-2 1995, Addison Wesley Longman, Inc..

A particularly advantageous procedure will be as follows. When a new application N+1 needs to retrieve data, its data manager first tries to retrieve the data in question from the old version N data repository via its plug-in. If the data will have been found indeed, the plug-in (509) will convert this data to the version N+1 format, store it in the version N+1 data repository, and remove it from the version N data repository. Thereafter, or if the data is not found in the old data repository, the data manager will retrieve the converted data from the version N+1 data source. Likewise, if the old applications (502) retrieve data its data manager (501) first tries to retrieve the data in question from the old version data repository (503). If the access happens to be unsuccessful, the data manager (501) uses the plug-in (505) to retrieve the data from the new version N+1 data repository (507). If found, the data is converted for use, but not stored in the version N data repository (503). Writing data will be preferentially executed to the own version of the data repository. At a certain later instant, when hardly any application user or none at all will be working anymore with the old version, the old application will be shut down, but the old data repository will be kept available for the new version application's plug in. The new application's migration plug-in (509) will then force a migration of all remaining data in the old version data repository. Thereupon, the N>N+1 migration plug-in (509) will be replaced by the null stub (510) and the old data repository will be removed. For the description of the system according to the invention, the object-oriented model will be used. This means that where appropriate the invention will be described with reference to classes and objects instantiated from these classes. An object can be envisaged as a container of data and this data can be accessed only via methods provided by the object. A persistent object is an object that is saved and restored automatically upon exiting and starting of an application.

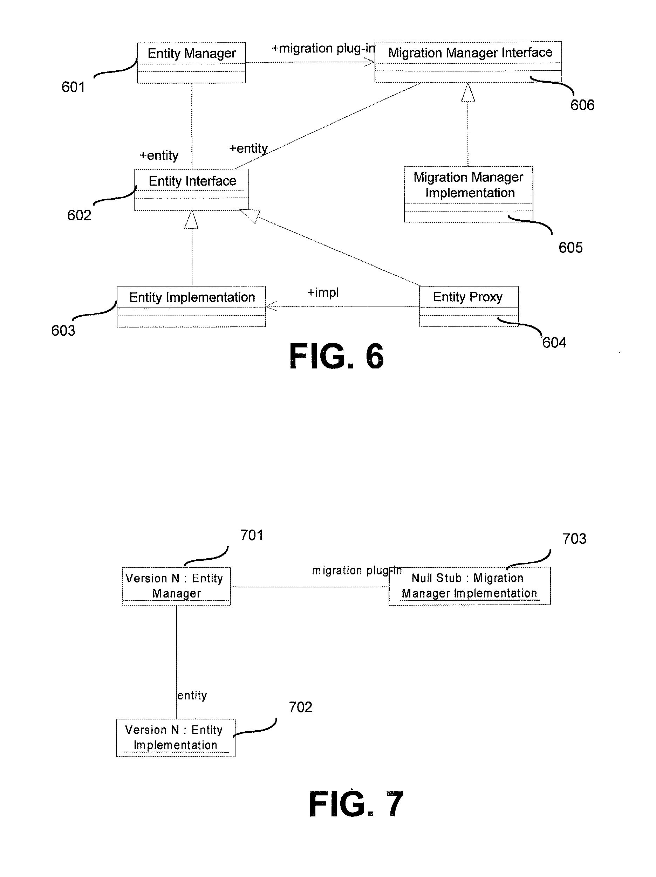

Figure 6 illustrates as a first Unified Modelling Language diagram a Class diagram. By itself, UML is a well-known modelling language in software generation procedures, and in consequence, would not warrant a further extensive disclosure herein. A class diagram shows relations between classes involved. Block 601 represents the entity manager class, and as such, it is part of the data manager. In respect of the art under consideration, an entity is an identifiable (addressable) information object. For the exemplary fields of application given before i.e. operating systems, word processors, databases and e-services, the entities are respectively: files and directories, parts of a document and fonts etc; a table or a record; and articles in the shop, payment conditions, type of erp, etc. The set of all entities each time defines the state of the system. Entities make up the content of the data repository. Disparate types of entities may coexist. The Entity Manager, as part of the data manager gives the client application access to the data repository (e.g. select a person). It manages updates (e.g. additions, deletions, modifications) of entities in the repository. Block 602 represents the entity interface, i.e. it declares the methods and semantics for entities. The association between Entity Manager and Entity Interface indicates that the Entity Manager can call methods provided by the Entity Interface. In case of a database system methods may be getName() and setName(). Block 603 represents the Entity Implementation for effectively realizing Entity Interface 602. In this way, the implementation is decoupled from its interface so that the actual implementation is a component that easily may be exchanged for another one. Block 604 represents the Entity Proxy for effectively realizing Entity Interface 602. A proxy is a well-known design pattern in software engineering (see "Design Patterns: Elements of reusable object oriented software", Erich Gamma et al. ISBN 0-201-63361-2 1995, Addison Wesley Longman, Inc.). This Entity Proxy takes care that the old application 'sees' the old Entity Interface, however with the new Entity Implementation already under it. The role of migration plug-in illustrated already in earlier Figures is realized by the Migration Manager Implementation class 605 and the Migration Manager Interface class 606. The Migration Manager Interface class hides the actual implementation realised in the Migration Manager Implementation class. The interface provides e.g. the methods migrateCollection() and migratePrimaryKey() for migrating complete collections of entities and single entities respectively.

Figure 7 illustrates in a UML collaboration diagram objects instantiated from the classes showed in Fig. 6 for Version N collaboration corresponding with Figure 5, phase A. In this elementary configuration, block 701 represents the Entity Manager of Version N, that has an association with block 702, the Entity Implementation of Version N. Also the Entity Manager has an association with block 703, the Migration Manager Implementation Null Stub. It is noted that the data manager will accommodate a plurality of entity managers in case a plurality of entity types are present in the data model.

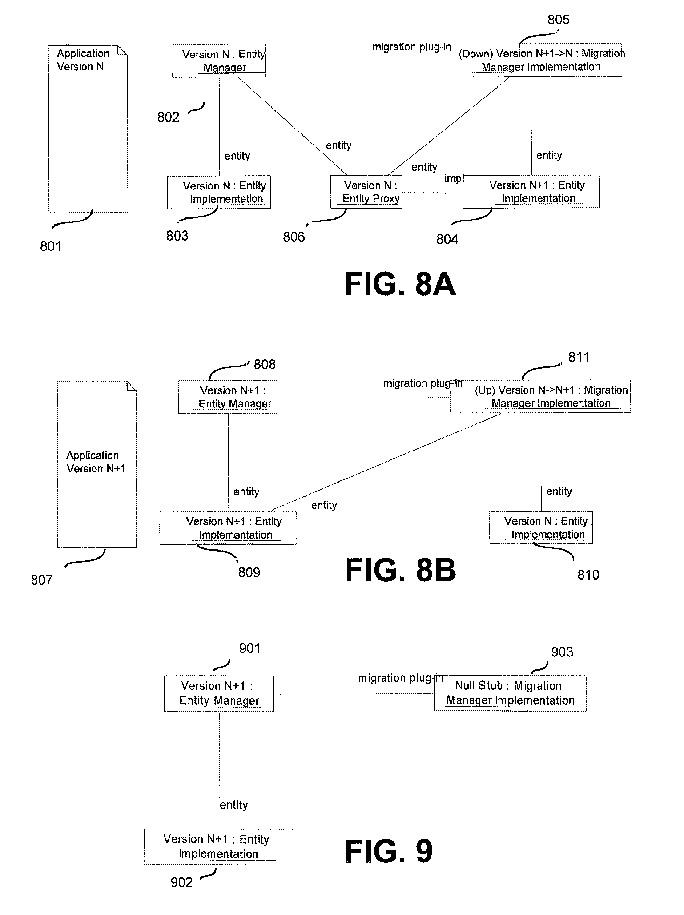

Figure 8a illustrates the collaboration during transition (phase B) from the perspective of a Version N Application 801. Blocks 802 and 803 correspond to blocks 701 and 702 respectively, in Figure 7. Block 804 represents the Entity Implementation Version N+1. In contradistinction to Figure 7 the version N Entity Manager has now an association with the Down Version Migrator (block 805). In this way, entities that can not be found in version N data repository are retrieved from version N+1 Data Repository and via the migration manager converted to version N format. The version N+1 Entity Implementation 804 is accessed from the version N Entity manager via the Entity Proxy 806.

Figures 8b illustrates the collaboration during transition (phase B) from the viewpoint of Version N+1 Application 807. Blocks 808 and 809 correspond to blocks 701 and 702 respectively, in Figure 7. Block 810 represents the Entity Implementation Version N. In contradistinction to Figure 7, the Entity Manager has now an association with the Up version of the Migration Implementation 811. In this way, care is taken that version N entities are converted to version N+1 entities upon retrieval from the N version Data Repository.
Figure 9 illustrates also in a UML collaboration diagram Version N+1 collaboration corresponding with phase C of Figure 5. In this elementary configuration, block 901 represents the Entity Manager of Version N+1, that has an association with version N+1 entities represented by block 902. The migration plug-in is now actually the Null Stub.

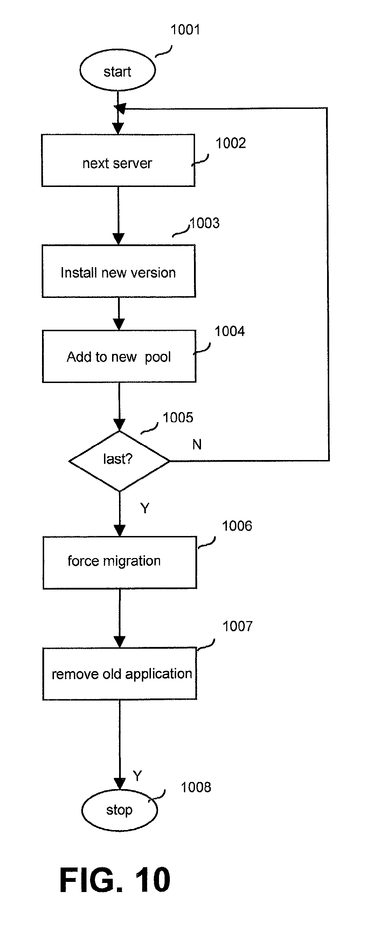

Figure 10 illustrates an applicable flow chart for use with a load balancing pool. In block 1001, the necessary hardware and software facilities are assigned. At his point, the earlier (N) version is running throughout. When the hot upgrade starts, in block 1002, one server is taken out of the load balancing pool in such manner that current client sessions that may be running on it are allowed to finish properly. Subsequently, this server will not be allowed to start new client sessions. When all client sessions on this particular server will have ended, or after a certain time-out period will have expired, the new application version will be installed on the server in block 1003. The above time-out period may be necessary if certain sessions may go on to delay the transition for an unacceptably long time. Migration plug-ins are then installed both in the old and in the new application version. These plug-ins will manage the persistent data in a consistent manner while both application versions will be running thereafter. Generally, the logic of the old application version will be preserved, but new user requests for the old application version can no longer be issued to this server. Next, in block 1004, the server in question is added to a new load balancing pool. The system router facility will distribute client requests over the old and new load balancing pools, respectively. Once the router facility will have routed a request from a particular client to the new load balancing pool, it must continue to do so. Requests for the old application should not be forwarded to the new load balancing pool.

In block 1005, the system checks whether the last server facility had been so transferred to the new load balancing pool. If negative (N), the process is repeated through the loop formed by the blocks 1002, 1003, 1004 and 1005. If positive (Y), the system in block 1006 forces a migration of all persistent data. During the effecting thereof, actual client requests will be served concurrently, using further on-demand migration wherever required. When ready, in block 1007, the old application Version is removed or uninstalled from the various servers. At his point, the upgrade to the new Application Version N+1 is complete, so that in block 1008, any redundant facilities may be relinquished again to serve other purposes.

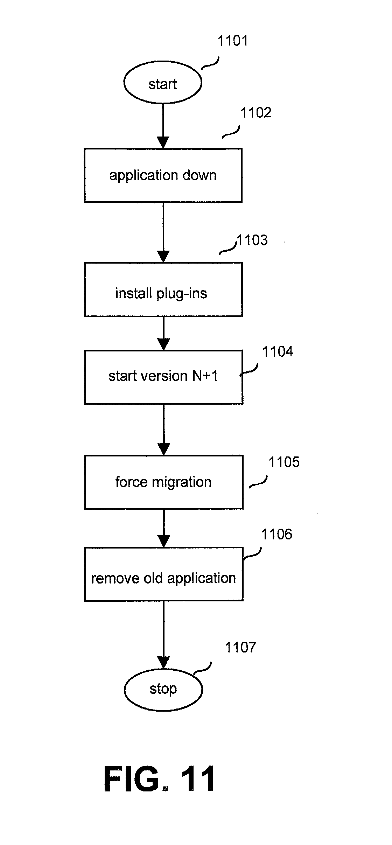

Figure 11 illustrates an applicable flow chart for use with a single server. In block 1101, the necessary hardware and software facilities are assigned. At his point, the earlier (N) version is running throughout. In block 1102, the old application version N is taken down temporarily, but the server is maintained operational. In block 1103, the new application version N+1 is installed on the server. E.g., old web pages are removed. Migration plug-ins are installed both on the old application version and on the new version, cf. Figure 5, part B. These plug-ins will manage persistent data in a consistent manner while both application versions are running. Note that the logic for the old application version is preserved, although requests for the old application version cannot be effectively issued to the server anymore, because the old web pages will be no longer available. In block 1104, the new application version N+1 is started. Next, in block 1105, a forced migration of the persistent data is initiated. During this migration, client requests will be served in a concurrent manner, using on-demand migration whenever necessary. Finally, in block 1106, the old application version N is removed from the server. At his point, the upgrade to the new application version N+1 is complete, so that in block 1107 any redundant facilities may be relinquished again to serve other purposes. In consequence, the present invention may be used advantageously with all Internet applications that must remain operational continuously. Upgrading requires no actions by end-users. The new version will automatically propagate to the end users.
It will be appreciated by those skilled in the art that the invention is not restricted to the details of the described embodiments. For example, the method is equally applicable to down migrate a service. Such situation may arise for example when a new version appears to be not yet stable and a return to the previous version is required.

## Claims

1. A method for executing a hot migrate operation from a first version of a service (511) using a first data model (N), to a second version of the service (512) using a second data model (N+1) that is modified with respect to said first data model, the service comprising a client application, a data manager and a data repository, said migrate operation being effected on a server facility (SA, SB) that accommodates multiple processes to be running in parallel, said method comprising the steps of:
- installing second version client applications
- installing a second version data manager operating according to the said second data model, and
- installing a second version data repository arranged according to the said second data model and cooperating with the second version data manager;
**characterized in that**
- the second version data manager is provided with a first migration plug-in; and **in that** an incremental roll-over process is effectuated, wherein in successive steps data is converted from said first version data repository to said second version data repository by means of the migration plug-in until all data will have been converted, after which any old version gets removable.

2. A method as claimed in Claim 1, **characterized in that**, the second version service is controlled to preferentially retrieve and remove data from the first version data repository, and thereupon to convert and store these data to the second version data repository.

3. A method as claimed in Claim 1, **characterized in that** the first version service is controlled to preferentially retrieve data from the first version data repository, but if unsuccessful, to retrieve and convert data from the new version data repository without storing thereof, where said conversion takes place with a second migration plug-in coupled to the first data manager.

4. A method as claimed in Claim 1, **characterized in that** the incremental roll-over process is concluded by shutting down the first version service but maintaining the first version data available to the first plug-in for having thereby executed a forced migration to the second data repository.

5. A method as claimed in Claim 1, **characterized in that** the incremental roll-over process is terminated when all data will have been migrated to the second version data repository where after the first migration plug-in is replaced by a null stub.

6. A method as claimed in Claim 1, whilst making said application is available through a distributed network (N).

7. A method as claimed in Claim 1, wherein said service is a data base service, a computer program, an operating system, an e-service or a mixture or a combination thereof.

8. A method as claimed in Claim 1, wherein said services are based on object-oriented programming.

9. A method as claimed in Claim 1, wherein said services run on a single server.

10. A method as claimed in Claim 1, wherein said services run on multiple servers (SA, SB) in a first pool, wherein successive servers are relieved from client sessions, get the new application version installed, and are entered into a second pool for running new application versions, until all servers will be contained in the second pool, whereupon data migration is rendered executable.

11. A method as claimed in Claim 1, wherein said migration operation is forced.

12. A method as claimed in Claim 1, wherein said migration operation is effected on demand.

13. A multiprocessing system (401) being arranged for implementing a method as claimed in Claim 1 and comprising control means for executing a hot migrate operation from a first version of service (511) using a first data model (N), to a second version of the service (512) using a second data model (N+1) that is modified with respect to said first data model, said migrate operation being effected on a server facility (401) that accommodates multiple processes to be running in parallel, said system comprising installing means for installing second version client applications (506) for installing a second version datamanager (508) operating according to the said second version data model and for installing a second version data repository (507) arranged according to the said second data model and cooperating with the said second version data manager;
said system being **characterized by** incremental roll-over control means that are operative for converting successive said processes from said first to said second service version comprising a first migration plug-in (509) for converting in successive steps data from said first version data repository to said second version data repository until all processes and data will have been converted.

14. A system as claimed in Claim 13, comprising multiple servers, that are server-wise taken out of service from a first pool, have their migration plug-ins installed, and subsequently entered into a new pool, until all servers will have been converted.

15. A computer program implementing a method according to claim 1 on a carrier such as a storage medium or electrical signal.
